# EUROPEAN PATENT SPECIFICATION

(11) **EP 2 875 578 B1**
(45) Date of publication and mention of the grant of the patent: **01.11.2017**
(21) Application number: 13765504.9
(22) Date of filing: 17.07.2013
(51) Int. Cl.: H02N 2/10

(54) **IMPROVED TORQUE ROTARY MOTOR**
VERBESSERTER DREHMOMENTMOTOR
MOTEUR ROTATIF À COUPLE AMÉLIORÉ

(30) Priority: 18.07.2012 IT VI20120176
(43) Date of publication of application: 27.05.2015
(73) Proprietor: PHI DRIVE S.R.L., 10129 Torino (TO) (IT)
(72) Inventor: BONFIGLIO, Paolo, CH-6534 San Vittore - GR (CH); CAU, Nicola Lussorio, I-20131 Milano (IT)
(74) Representative: Corradini, Corrado
(86) International application number: PCT/IB2013/055867
(87) International publication number: WO 2014/013443

(56) References cited:
- WO-A1-97/26702
- DE-A1- 1 613 087
- DE-U1- 9 414 601

## Description

### Field of the invention

The present invention generally finds application in the field of energy conversion machines and particularly relates to an improved torque rotary motor.

### Background art

Rotary motors are known, which have a pair of concentric annular members associated to a power shaft and designed to interact for transferring a driving torque to the shaft, thereby rotating it about its axis.

Particularly, EP 2 064 754, US 6,664,710 and JP63039478 disclose rotary motors having a first annular member operatively connected to the drive shaft and configured to rotate about its own center axis, whereas the second annular member, disposed inside or outside the first member, is adapted for translation in a base plane in predetermined directions.

Furthermore, the motor comprises a plurality of linear actuators, which are adapted to promote translation of the second annular member in the above mentioned directions and to promote contact of one point of the inner/outer surface thereof with the corresponding outer/inner surface of the first annular member.

The actuators sequentially interact with the second annular member to promote a controlled displacement of the contact point of the surfaces, to generate a precession motion of the first annular member relative to the second annular member.

Appropriate adjustment of the intensity and frequency of the stresses imparted by the actuator members to the second annular member will accordingly change the torque generated by the motor and imparted to the power shaft.

WO97/26702 discloses a rotary motor comprising an annular member adapted to move in a base plane and a plurality of actuators adapted for sequential interaction therewith to promote rotation thereof about a corresponding axis of rotation orthogonal to such plane. Furthermore a fixed stator is provided, which is adapted to interact with the inner surface of the annular member to define therewith a contact point during rotation.

Nevertheless, these prior art arrangements have the drawback of providing a relatively low torque which considerably restricts their use.

A further drawback of this arrangement is that these motors are relatively complex and their assembly requires a time-consuming and laborious work.

Also, these prior art motors have a limited size-scalability which prevents their use in fields that require high miniaturization.

Not the least, the precession motion of the first annular member relative to the second annular member may be particularly accurate adjustment and control of the linear stroke of the actuators and the dimensional tolerances of the annular members.

### Disclosure of the invention

The object of the present invention is to overcome the above drawbacks, by providing an improved torque rotary motor that achieves high efficiency and relative cost effectiveness.

A particular object of the present invention is to provide a rotary motor that provides a relatively high output torque with less friction losses.

A further object of the present invention is to provide an improved torque rotary motor that has a particularly small overall size and can be easily fabricated, with relatively short-time and low-cost manufacturing processes.

Yet another object of the present invention is to provide an improved torque rotary motor that is easily scalable in its size, and is suitable for use in applications requiring high miniaturization.

Another important object of the present invention is to provide an improved torque rotary motor that affords high accuracy in its movement without requiring particularly accurate adjustment and control of its actuators.

These and other objects, as better explained hereafter, are fulfilled by an improved torque rotary motor as defined in claim 1.

With this particular combination of features, the motion-imparting annular member will interact through respective friction forces both with the constraint members and with the actuators, that will push it to contact with these means, thereby defining at least two contact points.

As a result, the annular member will generate a driving torque which, excluding sliding friction, will be substantially twice the torque that would be generated by the movable annular member and the containing means if there were a single contact point therebetween.

Advantageously, the actuators may be placed inside the annular member, said first contact point being situated on said inner peripheral surface of said annular member.

Furthermore, the actuators may be placed in angularly offset positions for selective and sequential interaction with the inner peripheral surface of such annular member.

The constraint means may comprise a plurality of pin members arranged at the periphery of the annular member in angularly offset positions, said pin members having a lateral surface designed for interaction with one of the outer and inner peripheral surfaces of the annular member to define the second contact point.

Conveniently, the pin members may be stationary and situated at a fixed distance from said center axis, said distance defining a predetermined radial clearance with the outer or inner peripheral surface in contact therewith.

This particular configuration ensures that three contact points are always provided at the same time on the annular member, which will further improve the efficiency of the motor.

Furthermore, by appropriately sizing the annular member, a substantially pure rolling motion may be obtained.

Also, the characteristics of the motor are not affected by the sizes of the pin members and the actuators, which eliminates any restriction associated with dimensional tolerances, thereby solving the typical scalability problems of prior art motors.

Moreover, the pin members may constantly contact the outer peripheral surface of the annular member and be adapted for controlled translation in respective substantially radial directions, upon interaction with the outer peripheral surface during rotation of the inner annular member.

The pin members may be arranged at the periphery of the annular member with a predetermined radial clearance and may be associated with elastic means arranged at their periphery and sequentially acting in a substantially radial direction.

This allows local reduction or elimination of the radial clearance between the constraint means and the annular member, thereby further improving scalability and particularly affording miniaturization of the motor.

Advantageous embodiments of the invention are obtained in accordance with the dependent claims.

### Brief description of the drawings

Further features and advantages of the invention will become more apparent upon reading of the detailed description of a few preferred, non-limiting embodiments of an improved torque rotating motor of the invention, which are described as non-limiting examples with the help of the accompanying drawings in which:
FIGS. 1 to 3 are schematic views of respective preferred configurations of a motor of the invention;
FIG. 4 is a schematic view of the invention, which shows the condition in which there is no sliding motion.

### Detailed description of a few preferred embodiments

Referring to the above figures, there are shown certain preferred, non-limiting configurations of a rotary motor of the invention, that may find application in various fields, without particular limitation.

In its basic configuration, that is found in all the embodiments of the annexed figures, the rotary motor, generally designated by numeral 1, comprises a base plane 7, defining a first axis of rotation R₁ substantially orthogonal to the plane 7 and an annular member 2 that is adapted to be associated with motion imparting means having a predetermined resistant torque Cr, not shown, e.g. comprising a drive shaft in turn designed to be connected to a load to be driven.

The annular member 2 is adapted for both translational and rotational movement in the plane π about a second substantially central axis of rotation R₂, parallel to the first axis R₁.

Furthermore, the annular member 2 has an inner peripheral surface 3 and an outer peripheral surface 4, which are preferably substantially circular and concentric.

The motor 1 also comprises constraint means 5 adapted to bound the movement of the annular member 2 in the plane π.

The constraint means 5 may be arranged outside and at the periphery of the annular member 2.

A plurality of actuators 6, 6', 6", 6'" are also provided, which are adapted to sequentially interact with the inner annular member 2 to promote the precessional motion thereof in the plane π relative to the first axis R₁.

Particularly, such precessional motion is composed of a rotational motion of the annular member 2 about the second axis of rotation R₂ and a rotational motion of the second axis R₂ about the first axis R₁, which will be the axis of precession, such that the second axis R₂ defines a circumference.

According to a peculiar feature of the invention, the actuators 6, 6', 6", 6'" are designed for direct interaction with one of the peripheral surfaces 3, 4 of the annular member 2, to define therewith at least one first contact point P₁ at which the actuators 6, 6', 6", 6'" exert an outwardly directed radial force T₁. When there is a resistant torque Cᵣ, a first substantially tangential friction force F₁ will be generated at the first contact point P₁.

Furthermore, the constraint means 5 have lateral edges 7, 7', 7", 7'" designed for interaction with the other of the peripheral surfaces 4, 3 of the annular member 2, to define therewith at least one second contact point P₂ at which the constraint means 5, exert an inwardly directed radial force T₂. When there is a resistant torque Cᵣ, a second substantially tangential friction force F₂ will be generated at the second contact point P₂.

The combination of pair of radial forces T₁, T₂ and the pair of tangential friction forces F₁, F₂ are adapted to generate a driving torque Cₘ acting upon the annular member 2 to overcome the resistant torque Cr and promote the above mentioned precessional motion w.

Advantageously, the actuators are placed within the annular member 2 in angularly offset positions, to act in respective substantially radial directions X, X', X", X"'.

Thus, each actuator 6, 6', 6", 6'" may be caused to contact the inner peripheral surface 3 of the annular member 2, selectively and according to a predetermined sequence, such that first contact points P₁ may be defined thereon.

The number of actuators 6, 6', 6", 6"', , four in the annexed figures, is only suggested by way of example and may change according to the type of motor 1, its size and/or the torque to be transmitted.

Unless otherwise stated, for simplicity the actuators 6, 6', 6", and their parts will be hereinafter designated by the non-indexed numerals, anything concerning the actuator 6 being intended to be found in a substantially similar and technically equivalent manner in the other actuators 6' 6", 6"'.

Conveniently, the actuators 6 are integral with the constraint means 5 and may be selected from the group comprising hydraulic, pneumatic, electric, piezoelectric actuators or the like.

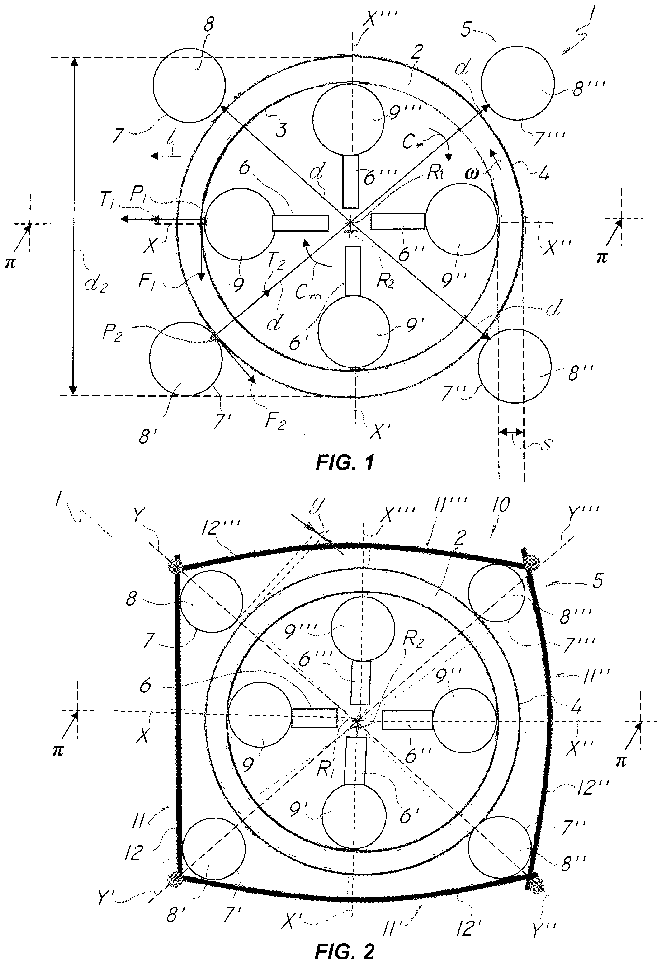

In the configuration of Fig. 1, the constraint means 5 are of stationary type, such that the transfer of the torque to the movable annular member 2 can be more efficient, because no part of the stress component transferred by the actuators 6 is absorbed by the movement of the constraint means 5.

In operation, the actuators 6 are sequentially moved in their respective radial directions X to act upon the inner peripheral surface 3 of the annular member 2.

The relatively short translational movement of the actuators 6, particularly if piezoelectric actuators are provided, will involve substantially negligible sliding friction losses at the first contact points P₁.

Fig. 1 shows a first configuration of the motor 1, in which the constraint means 5 are defined by a plurality of first pin members 8, 8', 8", 8"' arranged at the periphery of the inner annular member 2 in angularly offset positions.

Like the actuators 6, also the pin members 8, 8', 8", 8"' and their parts, and all like elements of the motor 1 provided in multiple units, will be designated hereinafter by non-indexed numerals.

The actuators 6 comprise substantially cylindrical or disc-shaped second pin members 9 located within the inner annular member 2 for exerting a substantially radial thrust force T₁ and a first substantially tangential friction component F₁ on the inner surface 3 of the annular member 2.

The first pin members 8 have a substantially cylindrical lateral surface 7, which is designed to exert a reaction force T₂ that is also substantially radial with respect to the annular member 2, and a second substantially tangential friction component F₂, on the outer peripheral surface 4 of the annular member 2, at the second contact point P₂.

The first pin members 8 are stationary with respect to the main plane of action π and are placed at a fixed distance d from the second axis R₂.

This distance d is greater than the radius of the outer peripheral surface 4 of the annular member 2 to define therewith a predetermined radial clearance g.

Preferably, the number of the first 8 and second 9 pin members is at least four, and each second pin member 9 may be driven by a respective linear actuator 6 selected from those available on the market.

The second pin members 9 are also movable in respective radial directions X defined by respective actuators 6, both toward and away from the inner surface 3 of the annular member 2.

In a further variant of this configuration, not shown, the first pin members 9 may be disposed in constant contact with the outer peripheral surface 4 of the annular member 2, thereby eliminating the radial clearance g and improving the scalability of the motor 1.

Also, the first pin members 8 may be arranged on the plane of action π, such that they are capable of controlled and restricted translation in respective substantially radial directions Y upon interaction with the outer peripheral surface 4 of the inner annular member 2 during its rotation.

Particularly, each first pin member 8 may be associated with a respective elastic member which acts at least in the radial direction to pull the corresponding pin member 8 toward the position in contact with the inner annular member 2.

The elastic members are suitably of such a size that, upon the action of the second movable pin members 9, the first pin members 8 move back in a radial direction until they reach a balance with the displacement forces.

In yet another alternative configuration, also not shown, the first pin members 8 may be located within the annular member 2 and the second pin members 9 and possibly their actuators 6 are located outside, with no significant change in the operation of the motor 1.

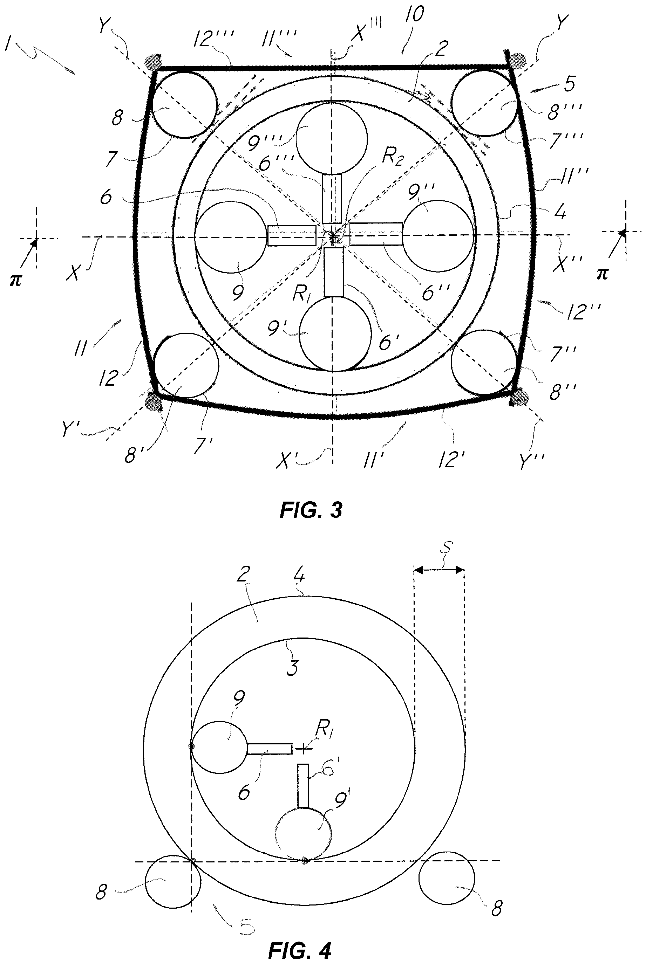

Figs. 2 and 3 show a further configuration of the motor 1 of the invention in two distinct operating states, further improving the above described configuration, in which the first pin members 9 interact with respective elastic members.

Particularly, as more clearly explained hereinafter, this configuration will avoid the condition in which, as the actuators 6 exert their thrust, at least one of the first pin members 8 might exert, by sliding, a friction force that opposes the rolling motion of the inner annular member 2.

For this reason, this additional configuration especially differs from the previous one in that the first pin members 8 are arranged at the periphery of the inner annular member 2 with a predetermined radial clearance g.

Furthermore, the first pin members 8 are associated with elastic means 10 that are arranged at their periphery and at the periphery of the inner annular member 2 and sequentially act in respective substantially radial directions Y to locally reduce the radial clearance g and selectively maintain contact between the lateral surface 7 of at least one of the first pin members 8 and the outer peripheral surface 4 of the annular member 2.

Meanwhile, the elastic means 10 are configured in such a manner that they do not act upon and hence they do not radially move the first pin members 8 whereby the annular member 2 will not act thereupon, and the above sliding problem will be prevented.

Particularly, the elastic means 10 comprise four leaf springs 11 consisting of corresponding elongate elastic members 12 hinged at their ends, and contacted by the first pin members 8.

In the rest position, with the actuators 6 acting on none of the second pin members 9, the leaf springs 11 are in an unbent state, and the first pin members 8 contact the inner annular member 2 with no radial clearance g therebetween.

Conveniently, in order that the first pin members 8 may be released, to prevent them from counteracting the motion, they are arranged in contact with two adjacent leaf springs 11, whereby each spring 11 will act upon two distinct first pin members 8.

In operation, in the configuration of Fig. 1, the annular member 2 will roll on the lateral surfaces 7 of the first pin members 8.

The second contact point P₂ of the inner annular member 2 is defined by the contact of the outer peripheral surface 4 of the latter with the lateral surface 7 of at least one of the first pin members 8.

The displacement of the second contact point P₂ from a first pin member 8 to the pin member adjacent thereto is obtained by appropriately controlling the displacement of the actuators 6 to cause the annular member 2 to rotate about the second axis R₂.

Particularly, a first pair of actuators 6, 6' is adapted to promote the thrust of the corresponding second pin members 9 against the inner surface 3 of the annular member 4, whereas the other pair of actuators 6", 6"' is adapted to radially move away from the inner surface 3 of the annular element 2.

Thus, the annular member 2 undergoes a translational movement for promoting contact of the outer surface 4 with a corresponding first pin member 8.

Then, one actuator 6' of the first pair will progressively decrease its thrust while the other actuator 6 will keep it constant or increase it, to promote a rotational movement of the annular member 2 in the direction from the actuator 6 that is increasing its thrust to the one 6' that is decreasing it.

The rotation of the movable member 2 allows the outer surface 4 thereof to contact both the previous first pin member 8 and a pin member 8 adjacent thereto.

Now, the actuator 6 that had previously maintained or increased its thrust will start to decrease its action by moving away from the inner surface 3 of the annular member 2, while the actuator 6" adjacent thereto, which is part of the pair that initially moved away from the inner surface 3 will start to move toward the annular member 2 and push thereupon, thereby promoting further rotation thereof in the same direction of rotation.

The iteration of this sequence of actuation of the actuators 6 will allow accomplishment of a full turn of the annular member 2 about the second axis R₂ with a predetermined direction of rotation.

Conveniently, a reversed sequence of actuation of the actuators 6 will promote rotation of the annular member in an opposite direction of rotation.

It shall be noted that, at each time there will be three contact points between the annular member 2 and the first and second pin members 8, 9, with the annular member 2 that may be, at a given time, in contact with two first pin members 8 and a second pin member 9 or vice versa, i.e. a first pin member 8 and two distinct second pin members 9.

As better shown in Fig. 4, in order to avoid any sliding motion, such that a pure rolling motion is provided, the instantaneous centers of the annular member 2 relative to the pin members 8, 9 simultaneously contacted thereby, shall coincide. This state may be easily obtained by an appropriately set value of the thickness s of the inner annular member 2.

If the motor has the configuration of Figs. 2 and 3, in the rest state the leaf springs 11 will allow all the first pin members 8 to contact the outer surface of the annular member 2.

During rotation of the annular member 2, promoted by the actuators 6, the leaf springs will allow a pair of first pin members 8 to radially move away, while still contacting the outer surface 4 that exerts a thrust thereon.

Furthermore, the leaf springs 11 are adapted to allow radial approach of the other pair of the first pin members 8 to a predetermined extent, i.e. adapted to promote detachment of the lateral surface 7 thereof from the upper surface 4 of the annular member 2, thereby maintaining a predetermined clearance between such surfaces.

Conveniently, the provision of the elastic means 10 allows easy scaling of the size of the motor 1 for use thereof in various applications and implementations of a motor that has no clearance upon motion reversal, and has a particularly silent operation.

The above description clearly shows that the present invention fulfills the intended objects.

The motor of this invention is susceptible to a number of changes and variants, within the inventive concept disclosed in the appended claims. All the details thereof may be replaced by other technically equivalent parts, and the materials may vary depending on different needs, without departure from the scope of the invention.

While the motor has been described with particular reference to the accompanying figures, the numerals referred to in the disclosure and claims are only used for the sake of a better intelligibility of the invention and shall not be intended to limit the claimed scope in any manner.

## Claims

1. A rotary motor with improved driving torque, comprising:
- a base plane (TT) defining a first axis of rotation (R1) substantially perpendicular to said plane (TT);
- an annular member (2), adapted to move in said plane (TT) about a second axis of rotation (R2) and to be associated with motion imparting means having a predetermined resistant torque (Cr), said annular member (2) having an inner peripheral surface (3) and an outer peripheral surface (4);
- constraint means (5) adapted to bound the movement of said annular member (2) in said plane (TT);
- a plurality of actuators (6, 6', 6", 6"') adapted to sequentially interact with said annular member (2) to promote the precessional motion thereof with respect to said first axis (R1)
wherein said actuators (6, 6', 6", 6"') are designed to directly interact with one of said peripheral surfaces (3, 4) to define therewith at least one first contact point (P1) at which said actuators (6, 6', 6", 6"') exert a substantially radial outwardly or inwardly directed force (T1) and a first substantially tangential friction force (F1), said constraint means (5) having lateral edges (7, 7', 7", 7"') designed to interact with the other of said peripheral surfaces (3, 4) to define therewith at least one second contact point (P2) at which said constraint means (5) exert a substantially radial inwardly or outwardly directed reaction force (T2) and a second substantially tangential friction force (F2), said substantially radial forces (T1, T2) and said substantially tangential friction forces (F1, F2) being adapted to generate a driving torque opposing said resistant torque
**characterized in that** said constraint means (4) comprise a plurality of pin members (8, 8', 8", 8"') arranged peripherally of said annular member (2) in angularly offset positions, said pin members (8, 8', 8", 8"') having a lateral surface (7, 7', 7", 7"') designed for interaction with the other one of said peripheral surfaces of said annular member (2) to define said second contact point (P2).

2. A motor as claimed in claim 1, **characterized in that** said actuators (6, 6', 6", 6"') are located inside said annular member (2), said first contact point (P₁) being located on said inner peripheral surface (3).

3. A motor as claimed in claim 1 or 2, **characterized in that** said actuators (6, 6', 6", 6"') are integral with said constraint means (5) and placed in angularly offset positions for selective and sequential interaction with said inner peripheral surface (3).

4. A motor as claimed in any of the preceding claims, **characterized in that** said actuators (6, 6', 6", 6"') are selected from the group comprising hydraulic, pneumatic, electric, piezoelectric or the like actuators.

5. A motor as claimed in claim 1, **characterized in that** said annular member (2) has such a thickness (s) that the instantaneous centers of said annular member (2) coincide with said pin members (8, 8', 8", 8"'), thereby generating a pure rolling motion of said annular member (2) in said base plane (π).

6. A motor as claimed in claim 1, **characterized in that** said pin members (8, 8', 8", 8"') are stationary and located at a fixed distance (d) from said first axis (R₁) to define a predetermined radial clearance (g) with said inner (3) and outer (4) peripheral surfaces respectively.

7. A motor as claimed in claim 1, **characterized in that** said pin members (8, 8', 8", 8"') continuously contact said outer peripheral surface (4) for controlled translation along respective substantially radial directions (Y, Y', Y", Y"') in response to the interaction with said outer peripheral surface (4) during rotation of said annular member (2).

8. A motor as claimed in claim 1, **characterized in that** one or more of said pin members (8, 8', 8", 8"') are arranged at the periphery of said inner annular member (2) with a predetermined radial clearance (g), elastic means (10) being arranged at the periphery of said pin members (8, 8', 8", 8"') and sequentially acting along respective substantially radial directions (Y, Y', Y", Y"') to locally reduce said radial clearance (g) such that said lateral surface (7, 7', 7", 7"') of at least one of said pin members (8, 8', 8", 8"') is kept substantially in contact with the outer peripheral surface (4) of said inner annular member (2).

## Patentansprüche

1. Umlaufmotor mit verbessertem Antriebsmoment, umfassend:
- eine Grundebene (TT), die eine erste Drehachse (R₁) im Wesentlichen senkrecht zu der Ebene (TT) definiert;
- ein ringförmiges Element (2), das angepasst ist, um sich auf der Ebene (TT) um eine zweite Drehachse (R2) zu bewegen und um mit den bewegungsverleihenden Mitteln assoziiert zu sein, die ein vorbestimmtes Widerstandsmoment (Cr) haben, wobei das ringförmige Element (2) eine innere Umfangsfläche (3) und eine äußere Umfangsfläche (4) hat;
- Beschränkungsmittel (5), das angepasst ist, um die Bewegung des ringförmigen Elements (2) auf der Ebene (TT) zu begrenzen;
- eine Vielzahl von Stellantrieben (6, 6', 6", 6"'), die angepasst sind, um sequenziell mit dem ringförmigen Element (2) zu interagieren, um die Präzessionsbewegung davon in Bezug auf die erste Achse (R₁) zu fördern
wobei die Stellantriebe (6, 6', 6", 6"') konstruiert sind, um direkt mit einer der Umfangsflächen (3, 4) zu interagieren, um damit mindestens einen ersten Kontaktpunkt (P1) zu definieren, an dem die Stellantriebe (6, 6', 6", 6"') eine im Wesentlichen radial auswärts oder einwärts gerichtete Kraft (T1) und eine erste im Wesentlichen tangentiale Reibungskraft (F1) ausüben, wobei das Beschränkungsmittel (5) Seitenränder (7, 7', 7", 7"') hat, die konstruiert sind, um mit der anderen der Umfangsflächen (3, 4) zu interagieren, um damit mindestens einen zweiten Kontaktpunkt (P2) zu definieren, an dem das Beschränkungsmittel (5) eine im Wesentlichen radial einwärts oder auswärts gerichtete Reaktionskraft (T2) und eine zweite im Wesentlichen tangentiale Reibungskraft (F2) ausübt, wobei die im Wesentlichen radialen Kräfte (T1, T2) und die im Wesentlichen tangentialen Reibungskräfte (F1 ; F2) angepasst sind, um ein Antriebsmoment entgegengesetzt dem Widerstandsmoment zu fördern,
**dadurch gekennzeichnet, dass** das Beschränkungsmittel (4) eine Vielzahl von Stiftelemente (8, 8', 8", 8"') umfasst, die peripher an dem ringförmigen Element (2) an winklig versetzten Positionen angeordnet sind, wobei die Stiftelemente (8, 8', 8", 8"') eine Seitenfläche (7, 7', 7", 7"') haben, die zum Zusammenwirken mit der einen der Umfangsflächen des ringförmigen Elements (2) konstruiert sind, um dem zweiten Kontaktpunkt (P2) zu definieren.

2. Motor nach Anspruch 1, **dadurch gekennzeichnet, dass** sich die Stellantriebe (6, 6', 6", 6"') innerhalb des ringförmigen Elements (2) befinden, wobei sich der erste Kontaktpunkt (P₁) an der inneren Umfangsfläche (3) befindet.

3. Motor nach Anspruch 1 oder 2, **dadurch gekennzeichnet, dass** die Stellantriebe (6, 6', 6", 6"') integral mit dem Beschränkungsmittel (5) sind und an winklig versetzten Positionen für ein selektives und sequenzielles Zusammenwirken mit der inneren Umfangsfläche (3) platziert sind.

4. Motor nach einem der vorherigen Ansprüche, **dadurch gekennzeichnet, dass** die Stellantriebe (6, 6', 6", 6"') ausgewählt sind aus der Gruppe, umfassend hydraulische, pneumatische, elektrische, piezoelektrische oder ähnliche Stellantriebe.

5. Motor nach Anspruch 1, **dadurch gekennzeichnet, dass** das ringförmige Element (2) eine solche Stärke (s) hat, dass die momentanen Mitten des ringförmigen Elements (2) mit den Stiftelementen (8, 8', 8", 8"') übereinstimmen, wodurch eine reine Rollbewegung des ringförmigen Elements (2) auf der Grundebene (TT) erzeugt wird.

6. Motor nach Anspruch 1, **dadurch gekennzeichnet, dass** die Stiftelemente (8, 8', 8", 8"') stationär sind und sich in einem festgelegten Abstand (d) von der ersten Achse (R₁) befinden, um einen vorbestimmten radialen Abstand (g) von der inneren (3) bzw. äußeren (4) Umfangsfläche zu definieren.

7. Motor nach Anspruch 1, **dadurch gekennzeichnet, dass** die Stiftelemente (8, 8', 8", 8"') kontinuierlich die äußere Umfangsfläche (4) kontaktieren, für eine kontrollierte Verschiebung entlang jeweiliger im Wesentlichen radialer Richtungen (Y, Y', Y", Y"') als Reaktion auf das Zusammenwirken mit der äußeren Umfangsfläche (4) während einer Drehung des ringförmigen Elements (2).

8. Motor nach Anspruch 1, **dadurch gekennzeichnet, dass** eines oder mehrere der Stiftelemente (8, 8', 8", 8"') an dem Umfang des inneren ringförmigen Elements (2) mit einem vorbestimmten radialen Abstand (g) angeordnet sind, elastische Mittel (10) am Umfang der Stiftelemente (8, 8', 8", 8"') angeordnet sind und sequenziell entlang jeweiliger im Wesentlichen radialer Richtungen (Y, Y', Y", Y"') wirken, um lokal den radialen Abstand (g) zu reduzieren, sodass die Seitenfläche (7, 7', 7", 7"') von mindestens einem der Stiftelemente (8, 8', 8", 8"') im Wesentlichen in Kontakt mit der äußeren Umfangsfläche (4) des inneren ringförmigen Elements (2) gehalten wird

## Revendications

1. Moteur rotatif avec un couple moteur amélioré, comprenant :
- un plan de base (TT) définissant un premier axe de rotation (R1) substantiellement perpendiculaire au dit plan (TT) ;
- un membre annulaire (2), adapté pour bouger dans ledit plan (TT) autour d'un second axe de rotation (R2) et devant être associé avec moyens qui confèrent un mouvement ayant un couple résistant (Cr) prédéterminé, ledit membre annulaire (2) ayant une surface périphérique interne (3) et une surface périphérique externe (4) ;
- des moyens de retenue (5) adaptés pour limiter le mouvement dudit membre annulaire (2) dans ledit plan (TT) ;
- une pluralité de vérins (6, 6', 6", 6"') adaptés pour interagir de manière séquentielle avec le dit membre annulaire (2) pour favoriser le mouvement de précession de celui-ci par rapport au dit premier axe (R1)
où lesdits vérins (6, 6', 6", 6"') sont conçus pour interagir directement avec l'une desdites surfaces périphériques (3, 4) pour définir en outre au moins un premier point de contact (P1) où lesdits vérins (6, 6', 6", 6"') exercent une force radiale orientée vers l'extérieur ou vers l'intérieur (T1) et une première force de frottement substantiellement tangentielle (F1),
lesdits moyens de retenue (5) ayant des bords latéraux (7, 7', 7", 7"') conçus pour interagir avec les autres dites surfaces périphériques (3, 4) pour définir en outre au moins un deuxième point de contact (P2) où lesdits moyens de retenue (5) exercent une force de réaction substantiellement radiale (T2) orientée vers l'intérieur ou vers l'extérieur et une deuxième force de frottement substantiellement tangentielle (F2), lesdites forces substantiellement radiales (T1, T2) et lesdites forces de frottement substantiellement tangentielles (F1, F2) étant adaptées pour générer un couple moteur opposé au dit couple résistant
**caractérisé en ce que** les dits moyens de retenue (4) comprennent une pluralité d'éléments mâles (8, 8', 8", 8"') disposés de manière périphérique par rapport au dit membre annulaire (2) dans des positions angulairement décalées l'une par rapport à l'autre, lesdits éléments mâles (8, 8', 8", 8"') ayant une surface latérale (7, 7', 7", 7"') conçue pour interagir avec l'une desdites surfaces périphériques dudit membre annulaire (2) pour définir ledit deuxième point de contact (P2).

2. Moteur selon la revendication 1 , **caractérisé en ce que** lesdits vérins (6, 6', 6", 6"') sont situés à l'intérieur dudit membre annulaire (2), ledit premier point de contact (P₁) étant situé sur ladite surface périphérique interne (3).

3. Moteur selon les revendications 1 ou 2, **caractérisé en ce que** lesdits vérins (6, 6', 6", 6"') sont intégrés aux dits moyens de retenue (5) et disposés dans des positions angulairement décalées l'une par rapport à l'autre pour interagir de manière sélective et séquentielle avec ladite surface périphérique interne (3).

4. Moteur selon l'une quelconque des revendications précédentes, **caractérisé en ce que** lesdits vérins (6, 6', 6", 6"') sont sélectionnés au sein du groupe comprenant les vérins hydrauliques, pneumatiques, électriques, piézoélectriques ou similaires.

5. Moteur selon la revendication 1 , **caractérisé en ce que** ledit membre annulaire (2) a une épaisseur (s) telle que les centres instantanés dudit membre annulaire (2) coïncident avec lesdits éléments mâles (8, 8', 8", 8"'), générant ainsi un véritable mouvement de roulis dudit membre annulaire (2) dans ledit plan (TT).

6. Moteur selon la revendication 1 , **caractérisé en ce que** lesdits éléments mâles (8, 8', 8", 8"') sont fixes et situés à une distance fixe (d) dudit premier axe (R₁) pour définir un jeu radial prédéterminé (g) respectivement avec lesdites surfaces périphériques internes (3) et externes (4).

7. Moteur selon la revendication 1, **caractérisé en ce que** lesdits éléments mâles (8, 8', 8", 8"') soient en permanence en contact avec ladite surface périphérique externe (4) pour une translation contrôlée le long des directions substantiellement radiales respectives (Y, Y', Y", Y"') en réponse à l'interaction avec ladite surface périphérique externe (4) pendant la rotation dudit membre annulaire (2).

8. Moteur selon la revendication 1 , **caractérisé en ce que** un ou plus desdits éléments mâles (8, 8', 8", 8"') sont disposés à la périphérie dudit membre annulaire interne (2) avec un jeu radial prédéterminé (g), des moyens élastiques (10) étant disposés à la périphérie desdits éléments mâles (8, 8', 8", 8"') et agissant de manière séquentielle le long des directions substantiellement radiales respectives (Y, Y', Y", Y"') pour réduire localement ledit jeu radial (g) de sorte que ladite surface latérale (7, 7', 7", 7"') d'au moins l'un desdits éléments mâles (8, 8', 8", 8"') soit maintenue substantiellement en contact avec la surface périphérique externe (4) dudit membre annulaire interne (2).
